**Europäisches Patentamt**

**European Patent Office**

**Office européen des brevets**

(11) Veröffentlichungsnummer: **0 440 840 B1**

# (12) EUROPÄISCHE PATENTSCHRIFT

(45) Veröffentlichungstag der Patentschrift: **23.08.95**

(51) Int. Cl.6: **C08F 255/02**

(21) Anmeldenummer: **90102276.4**

(22) Anmeldetag: **06.02.90**

Die Akte enthält technische Angaben, die nach dem Eingang der Anmeldung eingereicht wurden und die nicht in dieser Patentschrift enthalten sind.

(54) **Verfahren zur Herstellung von Mischpolymerisaten des Ethylens mit hoher Schälfestigkeit.**

(43) Veröffentlichungstag der Anmeldung:
**14.08.91 Patentblatt 91/33**

(45) Bekanntmachung des Hinweises auf die Patenterteilung:
**23.08.95 Patentblatt 95/34**

(84) Benannte Vertragsstaaten:
**AT BE DE FR IT NL SE**

(56) Entgegenhaltungen:
| | |
|---|---|
| EP-A- 0 225 067 | EP-A- 0 247 877 |
| DE-A- 3 827 056 | FR-A- 2 289 536 |
| FR-A- 2 328 013 | US-A- 4 440 911 |

DATABASE WPI, Nr. 78-54336A [30], Derwent Publications Ltd, London, GB; & JP-A-53 069 295

DATABASE WPI, Nr. 79-46232B [25], Derwent Publications Ltd, London, GB; & JP-A-54 057 544

(73) Patentinhaber: **HOECHST AKTIENGESELL-SCHAFT**

**D-65926 Frankfurt am Main (DE)**

(72) Erfinder: **Hobes, John, Dr.Dipl.-Chem.**
**Erna Strasse 2b**
**B-4220 Dinslaken (DE)**
Erfinder: **Payer, Wolfgang, Dr.Dipl.-Chem.**
**Zedernweg 58**
**D-4230 Wesel 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von Mischpolymerisaten des Ethylens, die neben Ethylen ein zweites und in untergeordneten Mengen ein drittes Monomer enthalten, sowie Mischpolymerisate bestimmter Zusammensetzung mit hohen Schälfestigkeiten und deren Verwendung als Haftvermittler und Kleber.

Das Verfahren zur Herstellung führt zu Mischpolymerisaten, die neben 70 bis 50 Gew.-% Ethylen, 30 bis 50 Gew.-% Vinylacetat und je 100 Gew.-Teile Ethylen-/Vinylacetat-Copolymerisat bis 5 Gew.-Teile eines dritten Monomeren enthalten. Das dritte Monomer ist Maleinsäureanhydrid, Maleinsäure, Fumarsäure, Acrylsäure oder Methacrylsäure.

Zur Herstellung der Mischpolymerisate setzt man Copolymerisate, die aus 50 bis 70 Gew.-% Ethylen und 30 bis 50 Gew.-% Vinylacetat bestehen und einen Schmelzindex (190/2,16) von 9 bis 300 (g/10 min) besitzen, mit dem dritten Monomeren und einem organischen Peroxid um. Je 100 Gew.-Teile Copolymerisat werden gegebenenfalls in Anwesenheit eines Lösungsmittels 0,5 bis 25 Gew.-Teile des dritten Monomeren und 0,01 bis 10,0 Gew.-Teile des organischen Peroxids eingesetzt.

Das anfallende ternäre Mischpolymerisat besitzt eine den einpolymerisierten Gew.-Teilen der drei Monomeren entsprechende Zusammensetzung und weist gegenüber dem als Ausgangsstoff verwendeten Copolymerisat einen stark herabgesetzten Schmelzindex (190/2,16) von 0,2 bis 10 (g/10 min) sowie eine Schälfestigkeit von ≥5N auf.

Mischpolymerisate der vorstehenden Zusammensetzung finden aufgrund ihrer Eigenschaften in der Technik großes Interesse. Sie lassen sich als Klebstoffe und Haftvermittler, zur Ummantelung von Kabeln und zur Herstellung hochhaftender Schichten, die unterschiedlich zusammengesetzt sein können, verwenden.

Die Vorzüge der Mischpolymerisate für diese Verwendungen beruhen auf ihrer guten Verarbeitbarkeit mittels Extrusion, ihrem Haftvermögen insbesondere an Metallen, ihrer Schälfestigkeit, ihrer Beständigkeit gegen Hitze, Chemikalien und Wettereinflüsse und ihrer Dehnbarkeit, die auch zur Herstellung relativ dünner Schichten genutzt werden kann.

Ferner können die Mischpolymerisate wegen ihrer guten Verträglichkeit mit normalen Polyolefinen auch für Koextrusion-Blasflaschenformenund zur Herstellung von Folien mittels Koextrusion eingesetzt werden.

Um eine unproblematische Verarbeitung der Mischpolymerisate durch Extrudieren zu ermöglichen, ist eine gewisse Elastizität erforderlich. Der Schmelzindex (190/2,16) sollte daher 10 (g/10 min) nicht übersteigen.

Ethylen-Mischpolymerisate der beschriebenen Zusammensetzung und Eigenschaften lassen sich durch Hochdrucksynthese generell nicht herstellen. Eine direkte Synthese - ausgehend von Mischungen der drei Monomeren - ist, insbesondere bei höheren Vinylacetatgehalten (≥ 25 Gew.-%), nicht möglich. Trotz Anwendung einerseits sehr hoher Drücke, andererseits sehr niedriger Temperaturen werden lediglich Mischpolymerisate mit niedriger Molmasse (entsprechend einem Schmelzindex ≥ 20 g/10 min) gewonnen.

Es ist bekannt, Homo- und Copolymerisate des Ethylens, die neben Ethylen ein weiteres Monomer enthalten, mit organischen Peroxiden zu behandeln, um die Molmasse zu erhöhen. Die Peroxide aktivieren dabei in den Polymerisaten noch vorhandene Doppelbindungen und führen zu einer Nachpolymerisation. Als Folge hiervon kann eine Kettenverlängerung der Makromoleküle und/oder eine Vernetzung von Ketten stattfinden. Die resultierenden Polymerisate weisen unterschiedliche Löslichkeiten in Lösungsmitteln auf. Die kettenverlängerten Produkte behalten ihre ursprüngliche Löslichkeit, hingegen verringert sich diese mit steigender Vernetzung.

Die US 45 15 745 beschreibt ein Verfahren zur Verminderung des Schmelzindexes und Modifizierung des rheologischen Verhaltens von Ethylen-Vinylacetat-Copolymerisaten durch Zusatz geringer Mengen organischer Peroxide. Dadurch werden die Polymerketten verlängert, zugleich jedoch eine Verknüpfung einzelner Makromoleküle miteinander, d.h. eine zweidimensionale Vernetzung, umgangen. Das Verfahren ist auf Ethylen-Vinylacetat-Copolymerisate mit einem Schmelzindex (190/2,16) von weniger als 0,75 (g/10 min) und einem Vinylacetatgehalt von 4 bis weniger als 30 Gew.-% als Ausgangsmaterial beschränkt.

Die ältere Anmeldung DE 37 32 722.4 beschreibt ein ausschließlich auf Ethylen-Vinylacetat-Copolymerisate gerichtetes Herstellverfahren. Die ungepfropften Copolymerisate enthalten neben Ethylen mindestens 40 Gew.-% Vinylacetat. Sie werden hergestellt, indem man Copolymerisate gleicher Zusammensetzung bei 160 bis 220°C mit 0,02 bis 0,5 Gew.-% eines organischen Peroxids bezogen auf Copolymerisat in einem Extruder umsetzt. Dadurch verringert sich der Schmelzindex (190/2,16) von ursprünglich 30 bis 300 auf 3,0 (g/10 min) und weniger. Die Zusammensetzung des Endproduktes entspricht der des eingesetzten Ethylen-Vinylacetat-Copolymerisats. Die Peroxide sollen unter den Reaktionsbedingungen innerhalb von 1 bis 4 Minuten zerfallen.

Die EP-A-0 225 067 betrifft ein Verfahren zur Herstellung von gepfropften butylacrylathaltigen Copolymeren. Wegen verarbeitungstechnischen Problematiken sollte der Acrylatgehalt möglichst niedrig eingestellt sein. Entsprechende Pfropfcopolymere weisen lediglich mäßige Klebeigenschaften auf.

Die US-A-4 440 911 beschreibt ein Pfropfverfahren, wobei ausschließlich LLDPE als Basispolymer eingesetzt wird. Dieses Polyethylen, das synthesebedingt durch einen linearen Kettenaufbau gekennzeichnet ist, und darüber hinaus keine esterhaltigen Gruppen aufweist, ist ebenfalls durch schwache Klebeigenschaften geprägt.

Aufgabe der Erfindung ist es, ein Verfahren zur Herstellung von Mischpolymerisaten des Ethylens, die hervorragende Klebeigenschaften (Schälfestigkeit) und zugleich einen Schmelzindex (190/2,16) von 10 (g/10 min) und weniger aufweisen, bereitzustellen.

Ein weiterer Vorteil des erfindungsgemäßen Verfahrens besteht darin, daß man beide Produkteigenschaften - Schälfestigkeit und Schmelzindex - beeinflussen kann. Man kann beispielsweise den Schmelzindex von vorneherein auf einen vorgegebenen Wert einstellen und unabhängig hiervon die Schälfestigkeit variieren. Umgekehrt kann man die Schälfestigkeit auf eine gewünschte Größe festlegen und den Erfordernissen entsprechend den Schmelzindex anpassen. Welcher Arbeitsweise man den Vorzug gibt, hängt von den jeweiligen Umständen ab. Auf diese Weise sind Mischpolymerisate mit beliebigen Kombinationen von Schmelzindex und Schälfestigkeit zugänglich. Der Anwender wird also in die Lage versetzt, ein auf sein spezielles Problem ausgerichtetes Mischpolymerisat gezielt herzustellen.

Darüber hinaus ist es möglich, innerhalb gewisser Bereiche sowohl die Schälfestigkeit als auch den Schmelzindex der Ethylen-Mischpolymerisate unabhängig voneinander auf beliebige Werte festzulegen.

Die vorstehend genannte Aufgabe wird gelöst durch ein Verfahren zur Herstellung von Mischpolymerisaten des Ethylens mit Vinylacetat als zweitem Monomeren und einem dritten Monomeren, mit einem Schmelzindex (190/2,16) von 0,1 bis 10 (g/10 min). Es ist dadurch gekennzeichnet, daß man ein Copolymerisat aus 70 bis 50 Gew.-% Ethylen und 30 bis 50 Gew.-% Vinylactat mit einem Schmelzindex (190/2,16) von 9 bis 300 (g/10 min) mit 0,5 bis 25 Gew.-Teilen Maleinsäureanhydrid, Maleinsäure, Fumarsäure, Acrylsäure oder Methacrylsäure als drittem Monomeren je 100 Gew.-Teile Copolymerisat bei 130 bis 220°C in Gegenwart von 1,0 bis 10,0 Gew.-Teilen je 100 Gew.-Teile Copolymerisat eines unter den Reaktionsbedingungen innerhalb von 1 bis 30 Minuten zerfallenden Peroxids und eines Lösungsmittels umsetzt.

Überraschenderweise gelingt es durch den neuen Prozeß, sowohl die Molmasse des eingesetzten Copolymerisats als auch die des gebildeten ternären Mischpolymerisats zu erhöhen, wobei diese Steigerung nicht auf eine Vernetzung, sondern auf eine Verlängerung der Molekülketten zurückzuführen ist. Hierbei ist von Bedeutung, daß entgegen der Lehre des Standes der Technik, Radikale bildende Stoffe in relativ hoher Konzentration eingesetzt werden können. Ferner war nicht zu erwarten, daß unter diesen Bedingungen die niedermolekularen Copolymerisate wie auch die sich bildenden ternären Mischpolymerisate keine Vernetzung ergeben. Der Schmelzindex der erfindungsgemäß hergestellten Mischpolymerisate liegt stets erheblich unter dem des jeweils eingesetzten Copolymerisats.

Unabhängig von der vorstehend beschriebenen Erhöhung der Molmasse erfolgt der Einbau des dritten Monomeren in das Copolymerisat und bewirkt eine signifikante Erhöhung der Schälfestigkeit.

Ausgangsmaterial für das erfindungsgemäße Verfahren sind Copolymerisate, die aus 70 bis 50 Gew.-% Ethylen und 30 bis 50 Gew.-% Vinylacetat bestehen. Sie weisen einen Schmelzindex (190/2,16) von 9 bis 300, insbesondere 20 bis 200, bevorzugt 40 bis 150 (g/10 min) auf. Unter Schmelzindex wird die Menge Copolymerisat (Ausgangsstoff wie Endprodukt) verstanden, die entsprechend DIN 53 735 innerhalb von 10 Minuten unter einem Auflagedruck von 2,16 kg bei 190°C durch eine 8 mm lange Düse von 2,095 mm Durchmesser hindurchgedrückt wird. Sie wird in g/10 min angegeben.

Von den verschiedenen Beanspruchungsmöglichkeiten Zug, Schlag, Schälung einer Klebverbindung ist primär letztere zur Beurteilung des Klebverhaltens heranzuziehen. Die Schälfestigkeit bei mit Polyethylen umhüllten Rohren ist definiert als die Kraft, die zum Abschälen eines bestimmten Streifens der Polyethylen-Umhüllung über einen definierten Schälweg erforderlich ist. Sie gibt die Kraft pro Reißlänge an, die benötigt wird, um den Verbund zu lösen. Man unterscheidet zwischen Anreiß- und Weiterreißkraft. Letztere ist für die Haftfestigkeit eines Systems von vorrangiger Bedeutung. Als zu verklebende Komponente dienen Aluminiumbleche.

Die Bestimmung der Schälfestigkeit erfolgt mit einer Zwick-Zerreißmaschine (vertikale Bauart), in deren Spannbacken die um 90° abgewinkelten Flächen (30 x 100 mm$^2$) des Verbundsystems eingespannt werden. Die eigentliche Klebfläche (70 x 100 mm$^2$) steht hierbei senkrecht zu den Spannbacken.

Die Zuggeschwindigkeit beträgt 50 mm/min. Die auftretenden Reiß- bzw. Schälkräfte werden mittels eines Schreibers registriert.

3

EP 0 440 840 B1

Die als Ausgangsstoffe dienenden Copolymerisate lassen sich nach bekannten Verfahren durch Polymerisation von Monomergemischen unter hohem Druck herstellen. Drücke von 200 bis 300 MPa und Temperaturen von 150 bis 250 °C stellen geeignete Bedingungen dar. Die Polymerisation wird in Autoklaven oder in Rohrreaktoren, die Leitungen zur Einspeisung von Kaltgas aufweisen können, durchgeführt. Die Reaktion erfolgt in Anwesenheit von Initiatoren, d. h. in Gegenwart Radikale bildender Stoffe wie Peroxide oder Sauerstoff. Der Zusatz von Moderatoren erübrigt sich in den Fällen, wo das zweite Monomere entsprechend seiner Konzentration selbst moderierend wirkt. Mitunter erweist es sich als zweckmäßig, dem Reaktionsgemisch zwecks Stabilisierung der Temperaturführung eine verdünnte Hydrochinonlösung zuzusetzen. Hierbei ist darauf zu achten, daß die Stabilisatorkonzentration nicht zu hoch gewählt wird, um eine Behinderung der Aufbaureaktion (Kettenverlängerung) zu vermeiden.

Zur Durchführung des Verfahrens vermischt man das Copolymerisat mit dem dritten Monomeren und dem Radikale bildenden Stoff gegebenenfalls in Anwesenheit eines Lösungsmittels möglichst homogen und erhitzt das Gemisch üblicherweise auf 130 bis 220°C.

Die Reaktionstemperatur ist der Zerfallscharakteristik des jeweils eingesetzten, Radikale bildenden Stoffes anzupassen. Als Radikale bildende Stoffe verwendet man insbesondere organische Peroxide.

Je 100 Gew.-Teile Copolymerisat werden in Abwesenheit eines Lösungsmittels 0,5 bis 5, insbesondere 0,9 bis 4, bevorzugt 1 bis 3 Gew.-Teile des dritten Monomeren zugesetzt und einpolymerisiert. In Anwesenheit eines Lösungsmittels setzt man je 100 Gew.-Teile Copolymerisat 5 bis 25, insbesondere 8 bis 23, bevorzugt 10 bis 20 Gew.-Teile des dritten Monomeren zu. Der erhöhte Anteil des dritten Monomeren ist erforderlich, damit in das Mischpolymerisat etwa 0,5 bis 5, insbesondere 0,9 bis 4, bevorzugt 1 bis 3 Gew.-Teile drittes Monomer je 100 Gew.-Teile Copolymerisat einpolymerisiert werden.

Gut geeignet als drittes Monomer ist Maleinsäureanhydrid, Fumarsäure, Acrylsäure oder Methacrylsäure, insbesondere Maleinsäureanhydrid, Fumarsäure oder Acrylsäure, bevorzugt Maleinsäureanhydrid oder Acrylsäure.

Durch die Peroxidmenge wird generell in gewissen Grenzen einerseits die Geschwindigkeit der Kettenverlängerung, andererseits der Grad der Kettenverlängerung beeinflußt. Verhältnismäßig niedrige Peroxidkonzentrationen führen relativ langsam zu Produkten mit einem vergleichsweise hohem Schmelzindex. Möchte man hingegen Produkte mit besonders niedrigem Schmelzindex herstellen, so empfiehlt es sich, höhere Peroxidmengen einzusetzen.

Das erfindungsgemäße Verfahren läßt sich sowohl in Abwesenheit eines zusätzlichen Lösungsmittels als auch in Anwesenheit eines zusätzlichen Lösungsmittels durchführen.

Als Lösungsmittel können aliphatische und/oder aromatische Kohlenwasserstoffe, Paraffinöl, Xylol, Ester aliphatischer und/oder aromatischer Carbonsäuren, insbesondere Alkylacetate eingesetzt werden.

Das Verhältnis Lösungsmittel : Copolymerisat soll 3 : 1 bis 8 : 1, insbesondere 4 : 1 bis 7 : 1, bevorzugt 4,3 : 1 bis 5,5 : 1 Gew.-Teile betragen. Die Reaktionstemperaturen liegen relativ niedrig, sie betragen 130 bis 200, insbesondere 135 bis 180, bevorzugt 140 bis 160°C.

Die Zerfallszeit des einzusetzenden Peroxids beträgt, entsprechend den Reaktionstemperaturen, etwa 1 bis 30 Minuten, sie kann auch darüber liegen.

Der Peroxidbedarf ist bei dem Verfahren infolge des zusätzlichen Lösungsmittels recht hoch. Je 100 Gew.-Teile Copolymerisat müssen etwa 1,0 bis 10, insbesondere 2 bis 8 Gew.-Teile Peroxid zugesetzt werden. Man kann die benötigte Menge Peroxid auf einmal oder (in vielen Fällen vorteilhaft) in mehreren gleichen oder verschiedenen Portionen während der Reaktion zusetzen.

Die schrittweise Zugabe des Peroxids wirkt sich auf die Qualität des Endproduktes, insbesondere auf eine Verminderung der Stippenzahl günstig aus.

Da in Anwesenheit eines Lösungsmittels nur ein geringer Teil des in die Reaktion eingesetzten dritten Monomers einpolymerisiert wird, ist seine Menge entsprechend groß zu wählen. Man setzt je 100 Gew.-Teile Copolymerisat 5 bis 25, insbesondere 8 bis 23, bevorzugt 10 bis 20 Gew.-Teile drittes Monomer zu.

Nach Beendigung der Umsetzung empfiehlt es sich, die Reaktionslösung mit etwa der doppelten bis fünffachen Menge eines Fällungsmittels zu versetzen. Als Fällungsmittel eignen sich organische Solventien, in denen das Mischpolymerisat nicht löslich ist. Hierzu zählen niedere Alkohole und Ketone.

Arbeitet man ohne Zusatz eines Lösungsmittels, so können höhere Reaktionstemperaturen Anwendung finden. Üblicherweise genügen Temperaturen von 160 bis 220, insbesondere 170 bis 210°C. Besonders bewährt haben sich Reaktionstemperaturen von 180 bis 200°C.

Die Zerfallszeit des einzusetzenden Peroxids liegt, entsprechend der Reaktionstemperatur, bei 1 bis 10, insbesondere bei 1 bis 4 Minuten.

Der Peroxidbedarf ist gegenüber der Arbeitsweise mit Lösungsmittel recht gering. Je 100 Gew.-Teile Copolymerisat genügen bereits 0,01 bis 1,0, insbesondere 0,02 bis 0,5, bevorzugt 0,05 bis 0,3 Gew.-Teile Peroxid. Man kann das Peroxid dem Copolymerisat als Reinsubstanz oder in gelöster Form beimischen.

4

Um eine möglichst gleichmäßige Vermischung des Peroxids mit dem Copolymerisat zu gewährleisten, löst man das Peroxid in einem Solvens, welches vorteilhafterweise das Copolymerisat nicht löst, setzt die Lösung dem Copolymerisat zu und vermischt. Anschließend entfernt man das Solvens, beispielsweise durch Verdampfen. Das derart vorbehandelte Copolymerisat wird anschließend der Reaktion zugeführt.

Es erweist sich oft als günstig, die Zugabe des Peroxids - auch zu einem mit Peroxid bereits vorbehandelten Copolymerisat - portionsweise vorzunehmen. Eine schrittweise Dosierung des Peroxids während der Umsetzung verringert die Anzahl der Stippen, beispielsweise in einer durch Extrusion hergestellten Folie.

Gut geeignet sind Peroxide, die bei 160 bis 220, insbesondere 170 bis 210, bevorzugt 180 bis 200 °C innerhalb von 1 bis 4 Minuten zerfallen.

Besonders brauchbare Peroxide sind 2,5-Dimethyl-2,5-bis-(tert.-butylperoxi)-hexan und/oder 1,1-Bis-(tert.-butylperoxi)-cyclohexan.

Der Bedarf an drittem Monomer ist im Vergleich zur Arbeitsweise mit Lösungsmittel sehr niedrig. Je 100 Gew.-Teile Copolymerisat setzt man 0,5 bis 5, insbesondere 0,9 bis 4, bevorzugt 1 bis 3 Gew.-Teile drittes Monomer zu. Diese Menge genügt, da das dritte Monomer quantitativ oder nahezu vollständig mit dem Copolymerisat unter Bildung des Mischpolymerisats reagiert.

Das erfindungsgemäße Verfahren läßt sich nach einer bevorzugten Ausführungsform, insbesondere in Abwesenheit eines Lösungsmittels, in einem Extruder durchführen. Die erforderliche Reaktionstemperatur wird durch Aufheizen des Extrusionswerkzeuges eingestellt. Die Verweilzeit des Produktgemisches (Ausgangsstoffe sowie bereits gebildetes ternäres Mischpolymerisat) im Extruder beträgt mehrere Minuten, insbesondere 1 bis 10, bevorzugt 2 bis 5 Minuten. Während der Extrusion entsteht üblicherweise ein Druck von etwa 0,05 bis 2,0 MPa. Es können jedoch in Abhängigkeit von Bauart und Arbeitsweise des Extruders auch höhere und tiefere Drücke auftreten.

Eine portionsweise Zugabe des Peroxids über zwei oder mehrere Öffnungen im Extruderwerkzeug bewirkt eine Herabsetzung der Stippenzahl.

Nach einer bevorzugten Ausführungsform vermischt man gegebenenfalls in Anwesenheit eines Lösungsmittels das Copolymerisat mit den entsprechenden Mengen Peroxid und drittem Monomeren und setzt dieses Gemisch um, wobei Peroxid und drittes Monomer zugleich mit dem Copolymerisat reagieren.

Es ist jedoch auch möglich, das Copolymerisat gegebenenfalls in Anwesenheit eines Lösungsmittels zuerst mit dem Peroxid und anschließend mit dem dritten Monomeren oder umgekehrt es zunächst mit dem dritten Monomeren und nachfolgend mit dem Peroxid zur Umsetzung zu bringen.

Welche der vorstehend beschriebenen Varianten man vorzieht, hängt von den jeweiligen Gegebenheiten ab.

Gegenstand der vorliegenden Erfindung sind ferner Mischpolymerisate bestehend aus 70 bis 50 Gew.-% Ethylen, 30 bis 50 Gew.% Vinylacetat und je 100 Gew.-Teilen Ethylen-/Vinylacetat-Copolymerisat 0,5 bis 5 Gew.-Teilen Maleinsäureanhydrid, Maleinsäure, Fumarsäure oder Methacrylsäure , mit einem Schmelzindex (190/2,16) von 0,1 bis 10 (g/10 min).

Hervorzuheben sind Mischpolymerisate, die sich dadurch auszeichnen, daß sie neben Ethylen 32 bis 48, insbesondere 35 bis 45 Gew.% Vinylacetat und je 100 Gew.-Teilen Ethylen-/Vinylacetat-Copolymerisat 0,7 bis 4,5, insbesondere 0,9 bis 4, bevorzugt 1 bis 3 Gew.-Teilen Maleinsäureanhydrid, Maleinsäure, Fumarsäure, Acrylsäure oder Methacrylsäure enthalten.

Die vorstehend beschriebenen Mischpolymerisate sind besonders geeignet, falls sie als drittes Monomer Maleinsäureanhydrid, Fumarsäure, Acrylsäure oder Methacrylsäure, insbesondere Maleinsäureanhydrid, Fumarsäure oder Acrylsäure, bevorzugt Maleinsäureanhydrid oder Acrylsäure enthalten.

Sie weisen einen Schmelzindex (190/2,16) von 0,15 bis 8, insbesondere 0,2 bis 5 (g/10 min) aus und besitzen eine Schälfestigkeit von ≧ 25, insbesondere ≧ 28 bis ≦ 50, insbesondere ≦ 40 N.

Die Schalfestigkeit wird durch den Vinylacetat-Gehalt und den Anteil des dritten Monomers, insbesondere Maleinsäureanhydrid, beeinflußt, höhere Mengen an Vinylacetat und drittem Monomer bewirken eine Steigerung der Schälfestigkeit, eine Herabsetzung ihrer Anteile zieht eine Absenkung der Schälfestigkeit nach sich.

Die Schälfestigkeit steigt (bei vorgegebenem Vinylacetatanteil) in Abhängigkeit von der Menge des dritten Monomeren überraschenderweise bis zu einem Maximum, das bei etwa 3 Gew.-Teilen drittes Monomer je 100 Gew.-Teile Copolymerisat liegt, höhere Mengen führen hingegen wieder zu einer Verringerung der Schälfestigkeit.

Die Mischpolymerisate lassen sich aufgrund ihrer besonderen Eigenschaften für die Koextrusion, Laminierung und Verbesserung der Zähigkeit von Polymergemischen (Blends), Schmelzmassen und zur Pulverbeschichtung verwenden.

Die nachstehenden Beispiele verdeutlichen die Erfindung, ohne sie einzuschränken.

5

Beispiele

Vergleichsversuche A bis E und Beispiele 1 bis 5

100 g Ethylen-Vinylacetat-Copolymerisat werden in 500 ml Xylol gelöst und mit Peroxid versetzt. Als Peroxid dient in den Vergleichsversuchen A bis E jeweils Di-tert.-butylperoxid in den Beispielen 1 bis 5 wird jeweils Dimethyl-2,5-bis-(tert.-butylperoxi)-hexan verwendet. Die mit Peroxid versetzte Lösung wird unter Rühren 90 Minuten einer Temperatur von 135°C ausgesetzt. Hierbei bilden sich u.a. vermutlich Copolymerisatradikale.

Anschließend setzt man der Copolymerisatlösung bei 135 °C unter Rühren tropfenweise eine Maleinsäureanhydridlösung (20 g Maleinsäureanhydrid (MSA) in 100 ml Xylol) verteilt über 10 Minuten zu. Anschließend beläßt man das Reaktionsgemisch noch weitere 2 Stunden unter Rühren bei 140°C.

Danach kühlt man ab, fällt das Mischpolymerisat durch Zugabe von etwa 2000 ml Methanol aus, nutscht ab und trocknet das Fällungsprodukt.

Die Versuchsergebnisse und weitere Angaben sind der nachfolgenden Tabelle 1 zu entnehmen.

Tabelle 1:

| | Copolymerisat | | | Peroxid | | Mischpolymerisat | | |
|---|---|---|---|---|---|---|---|---|
| | Ethylen[1] | Vinyl-acetat[1] | MFI[2] | Art[3] | Menge[4] | MSA[5] | MFI[2] | Schäl-festig-keit[6] |
| A 1 | 70 | 30 | 20 | I | 2 | 2 | 12,6 | 14,3 |
| | 70 | 30 | 20 | II | 2 | 2 | 0,8 | 31,6 |
| B 2 | 60 | 40 | 30 | I | 2 | 2 | 20,0 | 16,2 |
| | 60 | 40 | 30 | II | 2 | 2 | 1,5 | 32,5 |
| C 3 | 60 | 40 | 30 | I | 4 | 2 | 12,8 | 19,5 |
| | 60 | 40 | 30 | II | 4 | 2 | 0,9 | 38,8 |
| D 4 | 60 | 40 | 30 | I | 8 | 2 | 9,4 | 18,4 |
| | 60 | 40 | 30 | II | 8 | 2 | 0,8 | 26,4 |
| E 5 | 50 | 50 | 280 | I | 8 | 2 | 210 | 5,3 |
| | 50 | 50 | 280 | II | 8 | 2 | 9,2 | 25,6 |

1) Gew.-%
2) MFI (190/2,16) in g/10 min
3) I = Di-tert.-butylperoxid
   II = Dimethyl-2,5-bis-(tert.-butylperoxi)-hexan
4) je 100 Gew.-Teile Copolymerisat
5) MSA : Maleinsäureanhydrid Gew.-Teile je 100 Gew.-Teile Copolymerisat
(6) in N/25 mm

Vergleichsversuche F bis I und Beispiele 6 bis 11

2 kg Copolymerisat werden mit einer Lösung von Peroxid und Maleinsäureanhydrid in Aceton (Gewichtsverhältnis (Peroxid + MSA) : Aceton = 1 : 1) versetzt und anschließend in einem Taumelmischer intensiv gemischt. Das Lösungsmittel wird durch Luft verdunstet. Das derart mit Peroxid und Maleinsäureanhydrid imprägnierte Copolymerisat wird über eine Schüttelrinne einem Doppelschneckenextruder, dessen Werkzeug mittels mehrerer Heizzonen auf ein Temperaturprofil von 160 bis 200°C eingestellt wird, zugeleitet. Die Verweilzeit im Extruder beträgt je nach Drehzahl der Schnecke 1 bis 5 Minuten. Das extrudierte Mischpolymerisat wird als Strang durch ein Wasserbad geleitet und granuliert.

Die Versuchsergebnisse und weitere Angaben sind der nachfolgenden Tabelle 2 zu entnehmen.

Die Abhängigkeit der Schälfestigkeit vom Vinylacetatgehalt (bei konstantem Anteil Maleinsäureanhydrid) ist in Figur 1 dargestellt.

Tabelle 2:

| | Copolymerisat | | | Peroxid | | Mischpolymerisat | | |
|---|---|---|---|---|---|---|---|---|
| | Ethylen[1] | Ester[1] | MFI[5] | Art[6] | Menge[7] | MSA[7] | MFI[5] | Schäl-festig-keit(8) |
| F 6 | 70 | 30 (2) | 20 | I | 0,15 | 2,0 | 12,9 | 15,4 |
| | 70 | 30 (2) | 20 | II | 0,15 | 2,0 | 0,6 | 32,8 |
| G 7 | 60 | 40 (2) | 30 | I | 0,10 | 0,5 | 11,5 | 12,6 |
| | 60 | 40 (2) | 30 | II | 0,10 | 0,5 | 1,4 | 25,1 |
| H 8 | 60 | 40 (2) | 30 | I | 0,20 | 1,0 | 9,8 | 15,2 |
| | 60 | 40 (2) | 30 | II | 0,20 | 1,0 | 1,1 | 30,4 |
| I 9 | 60 | 40 (2) | 50 | I | 0,25 | 5,0 | 26,0 | 18,8 |
| | 60 | 40 (2) | 50 | II | 0,25 | 5,0 | 2,4 | 33,6 |

(1) Gew.-%
(2) Vinylacetat
(5) MFI (190/2,16) in g/10 min
(6) I = Di-tert.-butylperoxid
II = Dimethyl-2,5-bis-(tert.-butylperoxi)-hexan
(7) Gew.-Teile je 100 Gew.-Teile Copolymerisat
(8) in N

Figur 1

Schälfestigkeit

Figur 1: Schematische Darstellung der Schälfestigkeit von Ethylen-VA-MSA-Mischpolymerisaten (MSA-Gehalt 2 Gew.-%) in Abhängigkeit vom VA-Gehalt

VA = Vinylacetat

MSA = Maleinsäureanhydrid

**Patentansprüche**

1.   Verfahren zur Herstellung von Mischpolymerisaten des Ethylens mit Vinylacetat als zweitem Monomeren und einem dritten Monomeren, mit einem Schmelzindex (190/2,16) von 0,1 bis 10 (g/10 min), dadurch gekennzeichnet, daß man ein Copolymerisat aus 70 bis 50 Gew.-% Ethylen und 30 bis 50 Gew.-% Vinylacetat mit einem Schmelzindex (190/2,16) von 9 bis 300 (g/10 min) mit 0,5 bis 25 Gew.-Teilen Maleinsäureanhydrid, Maleinsäure, Fumarsäure, Acrylsäure oder Methacrylsäure als drittem Monomeren je 100 Gew.-Teile Copolymerisat bei 130 bis 220°C in Gegenwart von 1,0 bis 10,0 Gew.-Teilen je 100 Gew.-Teile Copolymerisat eines unter den Reaktionsbedingungen innerhalb von 1 bis 30 Minuten zerfallenden Peroxids und eines Lösungsmittels umsetzt.

2. Verfahren nach Anspruch 1, dadurch gekennzeichnet, daß man Copolymerisat und drittes Monomer in Gegenwart von 0,01 bis 1,0 Gew.-Teilen je 100 Gew.-Teile Copolymerisat eines unter den Reaktionsbedingungen innerhalb von 1 bis 30 Minuten zerfallenden Peroxids in Abwesenheit eines Lösungsmittels umsetzt.

3. Verfahren Anspruch 1, dadurch gekennzeichnet, daß man die Umsetzung bei 135 bis 180, insbesondere 140 bis 160°C durchführt.

4. Verfahren nach Anspruch 2, dadurch gekennzeichnet, daß man die Umsetzung bei 160 bis 220, insbesondere 170 bis 210, bevorzugt 180 bis 200°C durchführt.

5. Verfahren nach Anspruch 1 oder 3, dadurch gekennzeichnet, daß man das Copolymerisat mit 5 bis 25, insbesondere 8 bis 23, bevorzugt 10 bis 20 Gew.-Teilen des dritten Monomeren je 100 Gew.-Teile Copolymerisat umsetzt.

6. Verfahren nach Anspruch 2 oder 4, dadurch gekennzeichnet, daß man das Copolymerisat mit 0,5 bis 5,0, insbesondere 0,9 bis 4, bevorzugt 1 bis 3 Gew.-Teilen des dritten Monomeren je 100 Gew.-Teile Copolymerisat umsetzt.

7. Verfahren nach einem oder mehreren der Ansprüche 1 bis 6, dadurch gekennzeichnet, daß man als drittes Monomeres Maleinsäureanhydrid, Fumarsäure, Acrylsäure oder Methacrylsäure, insbesondere Maleinsäureanhydrid, Fumarsäure oder Acrylsäure, bevorzugt Maleinsäureanhydrid oder Acrylsäure, einsetzt.

8. Verfahren nach einem oder mehreren der Ansprüche 1, 3, 5, 7, dadurch gekennzeichnet, daß man 1 bis 10, insbesondere 2 bis 8 Gew.-Teile Peroxid je 100 Gew.-Teile Copolymerisat, einsetzt.

9. Verfahren nach einem oder mehreren der Ansprüche 2, 4, 6, 7, dadurch gekennzeichnet, daß man 0,02 bis 0,5, insbesondere 0,05 bis 0,3 Gew.-Teile Peroxid je 100 Gew.-Teile Copolymerisat einsetzt.

10. Verfahren nach einem oder mehreren der Ansprüche 1 bis 9, dadurch gekennzeichnet, daß man ein Peroxid, das bei einer Temperatur von 160 bis 220, insbesondere 170 bis 210, bevorzugt 180 bis 200°C innerhalb von 1 bis 4 Minuten zerfällt, einsetzt.

11. Verfahren nach einem oder mehreren der Ansprüche 1 bis 10, dadurch gekennzeichnet, daß man als Peroxid 2,5-Dimethyl-2,5-bis-(tert.-butylperoxi)-hexan und/oder 1,1-bis-(tert.-butylperoxi)-cyclohexan einsetzt.

12. Verfahren nach einem oder mehreren der Ansprüche 1 bis 11, dadurch gekennzeichnet, daß man die Umsetzung in einem Extruder ohne Lösungsmittel durchführt.

13. Verfahren nach einem oder mehreren der Ansprüche 1 bis 12, dadurch gekennzeichnet, daß man das Copolymerisat mit dem dritten Monomeren und dem Peroxid gleichzeitig umsetzt.

14. Verfahren nach einem oder mehreren der Ansprüche 1 bis 12, dadurch gekennzeichnet, daß man das Copolymerisat zuerst mit dem Peroxid und anschließend mit dem dritten Monomeren umsetzt.

15. Verfahren nach einem oder mehreren der Ansprüche 1 bis 12, dadurch gekennzeichnet, daß man das Copolymerisat zuerst mit dem dritten Monomeren und anschließend mit dem Peroxid umsetzt.

**16.** Mischpolymerisate bestehend aus 60 bis 50 Gew.-% Ethylen, 40 bis 50 Gew.-% Vinylacetat und je 100 Gew.-Teile Ethylen/Vinylacetat-Copolymerisat, 0,5 bis 5 Gew.-Teilen Maleinsäureanhydrid, Maleinsäure, Fumarsäure, Acrylsäure oder Methacrylsäure, mit einem Schmelzindex (190/2,16) von 0,1 bis 10 (g/10 min).

**17.** Mischpolymerisate nach Anspruch 16, dadurch gekennzeichnet, daß sie Maleinsäureanhydrid, Fumarsäure, Acrylsäure oder Methacrylsäure, insbesondere Maleinsäureanhydrid, Fumarsäure oder Acrylsäure, bevorzugt Maleinsäureanhydrid oder Acrylsäure enthalten.

**18.** Mischpolymerisate nach Anspruch 16 oder 17, dadurch gekennzeichnet, daß sie einen Schmelzindex (190/2,16) von 0,15 bis 8, insbesondere 0,2 bis 5 (g/10 min) aufweisen.

**19.** Verwendung der Mischpolymeriste für die Koextrusion, Laminierung und Zähigkeitsverbesserung von Blends, Schmelzmassen und Metallbeschichtung.

## Claims

**1.** A process for the preparation of terpolymers of ethylene with vinyl acetate as the second monomer and a third monomer, having a melt index (190/2.16) of 0.1 to 10 (g/10 min), characterised in that a copolymer comprising 70 to 50% by weight of ethylene and 30 to 50% by weight of vinyl acetate with a melt index (190/2.16) of 9 to 300 (g/10 min) is reacted with 0.5 to 25 parts by weight of maleic anhydride, maleic acid, fumaric acid, acrylic acid or methacrylic acid as the third monomer per 100 parts by weight of copolymer at 130 to 220°C in the presence of 1.0 to 10.0 parts by weight of a peroxide decomposing under the reaction conditions within 1 to 30 minutes per 100 parts by weight of copolymer as well as a solvent.

**2.** A process according to claim 1, characterised in that the copolymer and the third monomer are reacted in the presence of 0.01 to 1.0 parts by weight of a peroxide decomposing under the reaction conditions within 1 to 30 minutes per 100 parts by weight of copolymer in the absence of a solvent.

**3.** A process according to claim 1, characterised in that the reaction takes place at 135 to 180, in particular 140 to 160°C.

**4.** A process according to claim 2, characterised in that the reaction takes place at 160 to 220, in particular 170 to 210, preferably 180 to 200°C.

**5.** A process according to claim 1 or 3, characterised in that the copolymer is reacted with 5 to 25, in particular 8 to 23, preferably 10 to 20 parts by weight of the third monomer per 100 parts by weight of copolymer.

**6.** A process according to claim 2 or 4, characterised in that the copolymer is reacted with 0.5 to 5.0, in particular 0.9 to 4, preferably 1 to 3 parts by weight of the third monomer per 100 parts by weight of copolymer.

**7.** A process according to one or more of claims 1 to 6, characterised in that maleic anhydride, fumaric acid, acrylic acid or methacrylic acid, in particular maleic anhydride, fumaric acid or acrylic acid, preferably maleic anhydride or acrylic acid is used as the third monomer.

**8.** A process according to one or more of claims 1, 3, 5, 7, characterised in that 1 to 10, in particular 2 to 8 parts by weight of peroxide are used per 100 parts by weight of copolymer.

**9.** A process according to one or more of claims 2, 4, 6, 7, characterised in that 0.02 to 0.5, in particular 0.05 to 0.3 parts by weight of peroxide are used per 100 parts by weight of copolymer.

**10.** A process according to one or more of claims 1 to 9, characterised in that a peroxide which decomposes within 1 to 4 minutes at a temperature of 160 to 220, in particular 170 to 210, preferably 180 to 200°C is used.

EP 0 440 840 B1

**11.** A process according to one or more of claims 1 to 10, characterised in that 2,5-dimethyl-2,5-bis-(tert.-butylperoxy)-hexane and/or 1,1-bis-(tert.-butylperoxy)-cyclohexane is used as the peroxide.

**12.** A process according to one or more of claims 1 to 11, characterised in that the reaction takes place in an extruder without solvent.

**13.** A process according to one or more of claims 1 to 12, characterised in that the copolymer is reacted with the third monomer and the peroxide simultaneously.

**14.** A process according to one or more of claims 1 to 12, characterised in that the copolymer is first reacted with the peroxide and then with the third monomer.

**15.** A process according to one or more of claims 1 to 12, characterised in that the copolymer is first reacted with the third monomer and then with the peroxide.

**16.** Terpolymers comprising 60 to 50% by weight of ethylene, 40 to 50% by weight of vinyl acetate and, per 100 parts by weight of ethylene/vinyl acetate copolymer, 0.5 to 5 parts by weight of maleic anhydride, maleic acid, fumaric acid, acrylic acid or methacrylic acid with a melt index (190/2.16) of 0.1 to 10 (g/10 min.).

**17.** Terpolymers according to claim 16, characterised in that they contain maleic anhydride, fumaric acid, acrylic acid or methacrylic acid, in particular maleic anhydride, fumaric acid or acrylic acid, preferably maleic anhydride or acrylic acid.

**18.** Terpolymers according to claim 16 or 17, characterised in that they have a melt index (190/2.16) of 0.15 to 8, in particular 0.2 to 5 (g/10 min).

**19.** The use of the terpolymers for the co-extrusion, lamination and viscosity improvement of blends, melt masses and metal coatings.

**Revendications**

**1.** Procédé de préparation de copolymères ternaires ou de terpolymères de l'éthylène avec l'acétate de vinyle comme second monomère et un troisième monomère, le terpolymère ayant un indice de fusion (190/2,16) de 0,1 à 10 (g/10 min), procédé caractérisé en ce qu'on fait réagir un copolymère formé de 70 à 50 % en poids d'éthylène et de 30 à 50 % en poids d'acétate de vinyle, ayant un indice de fusion (190/2,16) de 9 à 300 (g/10 min) avec 0,5 à 25 parties en poids d'anhydride de l'acide maléique, d'acide maléique, d'acide fumarique, d'acide acrylique ou d'acide méthacrylique comme troisième monomère pour 100 parties en poids du copolymère, à 130 jusqu'à 220°C en présence de 1,0 à 10,0 parties en poids pour 100 parties en poids du copolymère, d'un peroxyde qui se décompose en l'espace de 1 à 30 minutes dans les conditions de réaction, et en présence d'un solvant.

**2.** Procédé selon la revendication 1, caractérisé en ce qu'on fait réagir un copolymère et un troisième monomère en présence de 0,01 à 1,0 partie en poids, pour 100 parties en poids du copolymère, d'un peroxyde qui, dans les conditions de réaction, se décompose en l'espace de 1 à 30 minutes, en opérant en présence d'un solvant.

**3.** Procédé selon la revendication 1, caractérisé en ce qu'on conduit la réaction à 135 jusqu'à 180, notamment à 140 jusqu'à 160°C.

**4.** Procédé selon la revendication 2, caractérisé en ce qu'on conduit la réaction à 160 jusqu'à 220, notamment à 170 jusqu'à 210, de préférence à 180 jusqu'à 210, de préférence à 180 jusqu'à 200°C.

**5.** Procédé selon la revendication 1 ou 3, caractérisé en ce qu'on fait réagir le copolymère avec 5 à 25, notamment 8 à 23, de préférence 10 à 20, parties en poids du troisième monomère pour 100 parties en poids du copolymère.

12

6. Procédé selon la revendication 2 ou 4, caractérisé en ce qu'on fait réagir le copolymère avec 0,5 à 5,0, notamment 0,9 à 4, de préférence 1 à 3, parties en poids du troisième monomère pour 100 parties en poids du copolymère.

7. Procédé selon une ou plusieurs des revendications 1 à 6, caractérisé en ce qu'on utilise comme troisième monomère l'anhydride de l'acide maléique, l'acide fumarique, l'acide acrylique ou l'acide méthacrylique, notamment l'anhydride de l'acide maléique, l'acide fumarique ou l'acide acrylique, de préférence l'anhydride de l'acide maléique ou l'acide acrylique.

8. Procédé selon une ou plusieurs des revendications 1, 3, 5, 7, caractérisé en ce qu'on utilise 1 à 10, notamment 2 à 8, parties en poids du peroxyde pour 100 parties en poids du copolymère.

9. Procédé selon une ou plusieurs des revendications 2, 4, 6, 7, caractérisé en ce qu'on utilise 0,02 à 0,5, notamment 0,05 à 0,3, partie en poids du peroxyde pour 100 parties en poids du copolymère.

10. Procédé selon une ou plusieurs des revendications 1 à 9, caractérisé en ce qu'on utilise un peroxyde qui se décompose en l'espace de 1 à 4 minutes à une température de 160 à 220, notamment de 170 à 210 et de préférence de 180 à 200°C.

11. Procédé selon une ou plusieurs des revendications 1 à 10, caractérisé en ce qu'on utilise comme peroxyde le 2,5-diméthyl-2,5-bis-(tert.-butylperoxy)-hexane et/ou le 1,1-bis-(tert.-butylperoxy)-cyclohexane.

12. Procédé selon une ou plusieurs des revendications 1 à 11, caractérisé en ce qu'on conduit la réaction dans une extrudeuse sans solvant.

13. Procédé selon une ou plusieurs des revendications 1 à 12, caractérisé en ce qu'on fait réagir le copolymère simultanément avec le troisième monomère et avec le peroxyde.

14. Procédé selon une ou plusieurs des revendications 1 à 12, caractérisé en ce qu'on fait réagir le copolymère tout d'abord avec le peroxyde puis avec le troisième monomère.

15. Procédé selon une ou plusieurs des revendications 1 à 12, caractérisé en ce qu'on fait réagir le copolymère avec le troisième monomère puis avec le peroxyde.

16. Copolymère ternaire ou terpolymère consistant en 60 à 50 % en poids d'éthylène, 40 à 50 % en poids d'acétate de vinyle et, pour 100 parties en poids à chaque fois du copolymère d'éthylène/acétate de vinyle, 0,5 à 5 parties en poids d'anhydride de l'acide maléique, d'acide maléique, d'acide fumarique, d'acide acrylique ou d'acide méthacrylique, ce copolymère ternaire ayant un indice de fusion (190/2,16) de 0,1 à 10 (g/10 min).

17. Copolymères ternaires ou terpolymères selon la revendication 16, caractérisé en ce qu'ils contiennent de l'anhydride d'acide maléique, de l'acide fumarique, de l'acide acrylique ou de l'acide méthacrylique, notamment l'anhydride d'acide maléique, de l'acide fumarique ou de l'acide acrylique, de préférence de l'anhydride de l'acide maléique ou de l'acide acrylique.

18. Copolymères ternaires ou terpolymères selon la revendication 16 ou 17, caractérisé en ce qu'ils présentent un indice de fusion (190/2,16) de 0,15 à 8, notamment de 0,2 à 5 (g/10 min).

19. Utilisation des copolymères ternaires ou des terpolymères pour la coextrusion, la stratification et l'amélioration de la viscosité ou de la ténacité de mélanges ou alliages ("Blends"), de masses fondues et pour le revêtement de métaux.